# EUROPEAN PATENT APPLICATION

(11) **EP 3 760 522 A1**
(43) Date of publication of application: **06.01.2021**
(21) Application number: 18901122.4
(22) Date of filing: 19.01.2018
(51) Int. Cl.: B62J 6/00

(54) **DEVICE AFFORDING SAFETY OF A CYCLIST IN CONDITIONS OF POOR VISIBILITY BY PROJECTING LIGHT ONTO THE CYCLIST'S BACK**

(71) Applicant: Babayev, Elnur, AZ1063 Baku (AZ)
(72) Inventor: Babayev, Elnur, AZ1063 Baku (AZ)
(74) Representative: Agca Kizil, Tugce
(86) International application number: PCT/AZ2018/000004
(87) International publication number: WO 2019/140494

(57) **Abstract**

The utility model is a device comprising two main parts - a controller and a projector. The controller is attached to the steering part of the bike and comprising buttons. The projector comprising lamps, the number and functions of which correspond to the controller buttons. The projector is attached to the seat of the bike so that the illumination of its lamps are displayed on the back of the cyclist riding the bike. The cyclist turns on, a particular projector lamp by pressing the appropriate buttons. Each of the lamps project a specific sign on the cyclist's back. If no button is pressed, one of the characters is projected by default. The controller and projector can be connected via wireless personal or wireless local network or larger wireless networks

## Description

### Technology field

The utility model related to devices which are designed to ensure safety, in particular for the lighting of bicycles and their riders on roads in poor visibility conditions. This model is also designed to warn other riders of the cyclist's intention to turn or stop in poor visibility conditions. This model is attached to the bike and has several mode backlights, which are controlled by the cyclist.

### Safety standards

With the exception of uncommon cases where cyclists are provided with separate lanes, riders of bicycles use automobile roads. This, in turn, increases the risk of traffic accidents, especially at night, as well as in other cases of poor visibility. Given the design of the bike and the level of protection of its rider in comparison with cars, the issue of proper lighting of the bike when driving on the road is fundamentally important.

Considerable amount of patented developments has been implemented in this area so far. The most popular is the lighting of wheels of bikes. There are examples of patents in this field, such as US 3,987,409; US 4.135.229; US 5,803, 574. Given the two-dimensional structure of the bicycle, the practice has significant disadvantages. Lightened wheels attracts attention from the sides, but drivers coming from behind or opposite can only see the bike when they get very close.

US patent 2010 / 0283590A A1 is a device that projects light down the left and right sides of a bicycle. This invention comprising three separate lamps that significantly increases power consumption of battery. One of the lamps projects an image of a cyclist, but there are no alternatives for switching the image to other identification signs. US patent 9,656. 602 B2 also provides a similar principle. According to this patent a projection of the "light bike path" on the sides is provided. This method of projecting light onto the road provides a thin band that is not always clearly visible. In addition, in both of the above mentioned cases, the projected light is located at the dawn level of sight of automobile drivers, that will be trailing behind the cyclist. Visibility is particularly difficult during rain, as different light sources are projected onto the ground, making it quite difficult to differ the light projected from the bike.

Moreover, various mechanisms have been developed for providing a turn signal light of a bike that turns from one direction to the other ("turn signal lights"). As a rule, such mechanisms enable the attachment of light lamps to the handlebar of a Bicycle or to the rear-view mirrors. However, these light signals are weak compared to the "turn signal lights" of cars. At night, possibly the light of more powerful car headlights will make these lights nonvisible. The same disadvantages apply to "stoplights" designed for bicycles.

### Description of the utility model

The purpose of this utility model is to ensure the safety of bicycle traffic on automobile roads and other roads in poor visibility conditions. This model is a device comprising a hand- held controller and a light projector. The controller is attached to the steering part of the bike, and the projector is attached to the seat.

One of the differences between this model and similar devices patented today is a simple mechanism. The controller and projector are connected wirelessly, without any cable.

The novelty of the model is related to the object on which the light is projected. The mechanism of the model provides illumination on the back of the Bicycle rider. Lighting at this level provides accurate direct visibility of the object (the Bicycle and its rider) from the driver's side of the approaching vehicle. Thus, the sign projected on the cyclist's back is at eye level with the driver of the car, therefore guaranteeing visibility.

The projection of the sign on the cyclist's back can be seen in all weather conditions including rainy weather. Thus, the presence of water on the earth's surface has no effect on the level of reflection of the signs projected by this device.

At the same time, this model provides the projection of not just light, but specific light images on the cyclist's back. Moreover, these images are intended to warn car drivers regarding the upcoming actions of the cyclist, namely: to turn left or right, as well as to stop.

### Brief description of the figures

FIG. 1A. View of a Bicycle from the profile with the device attached to it
FIG. 1B. View of a Bicycle with device attached on the back
FIG. 2. The Controller attached to the bike
FIG. 3. The Projector from two angles

### Detailed description of the utility model

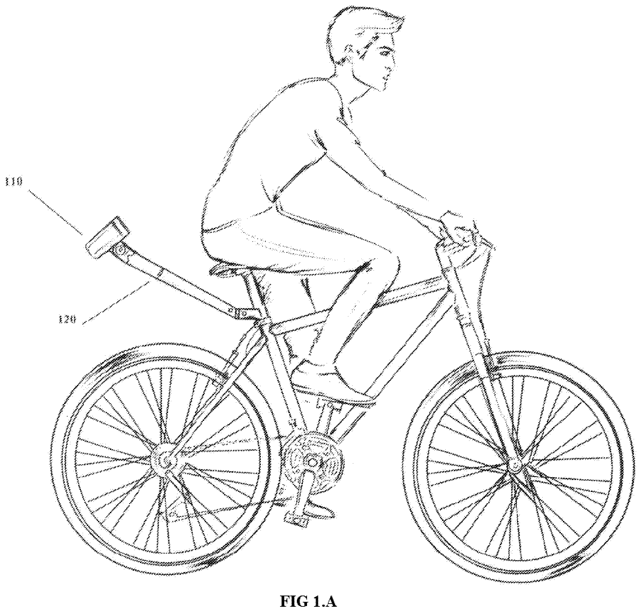

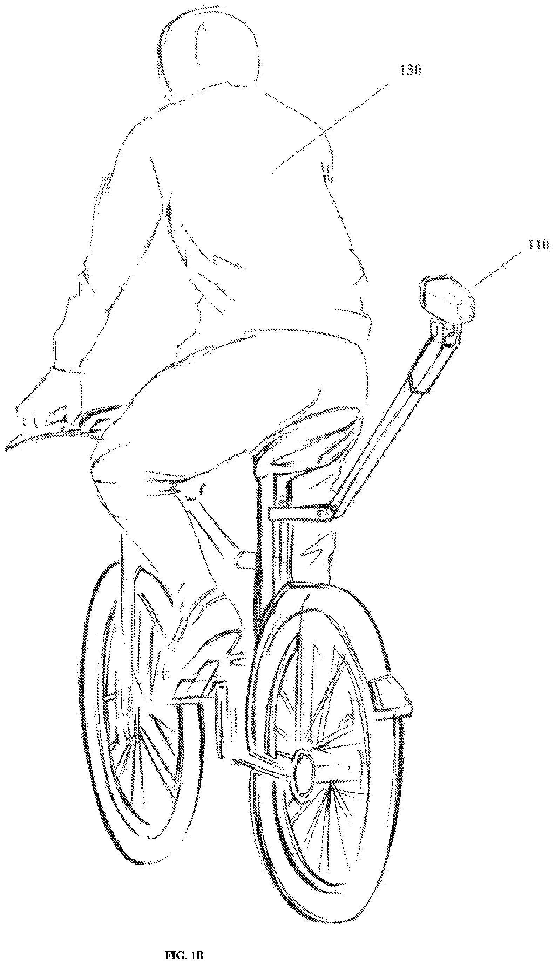

As shown in **FIG. 1A****,** the projector **(110)** is attached to the seat using a special tube **(120),** with length adjustment. The projector is attached to the bicycle seat that the illuminations are directed towards the back of the rider. As shown in **FIG. 1B****,** the projector illuminates the area **(130),** distinguishes this device from similar mechanisms.

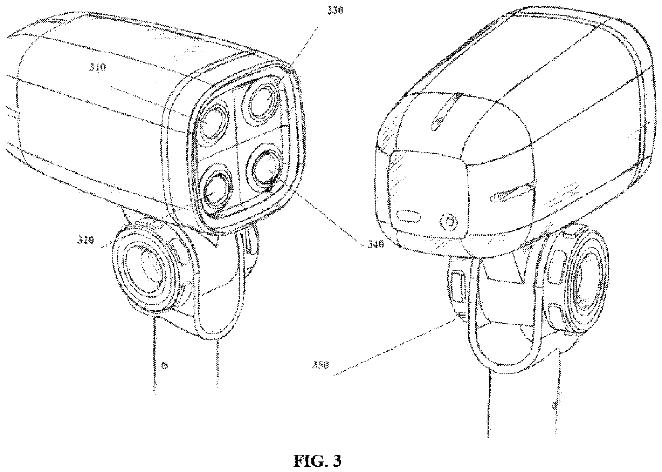

As can be seen in **FIG. 3****,** the projector is connected directly to the tube using a part **(350),** which allows adjusting the direction of light, fixing the projector in a certain state and locking the projector with a special lock. Adjusting the direction of the illumination plays an important role, as it easily adapts the mechanism to cyclists with different physical characteristics.

The projector is turned on using the button on the back panel. The projector is continuously charged by a rechargeable battery.

As shown in **FIG. 3****,** the projector comprises four LED lamps **(310, 320, 330, 340),** each projecting a separate image.

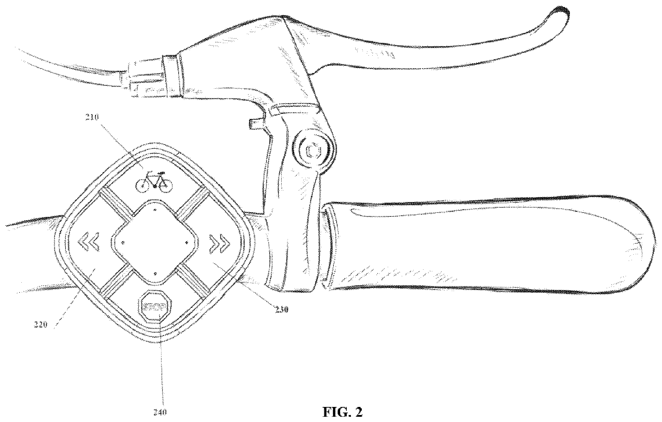

The controller is described in **FIG. 2****.** The controller is attached to the steering part of the bike using clips. The controller is turned on by a button on the back panel. There are four buttons on the front panel of the controller **(210, 220, 230, 240),** each of them has images that correspond to the projected images. The controller is continuously charged by means of replaceable batteries.

Inside the controller and projector, there are "Bluetooth" modules located on the corresponding printed circuit boards. These modules are connected using an identical code such that a single projector recognizes signals from only one controller.

When the corresponding controller button is pressed, the corresponding signal is transmitted from one module to another. The projector module receives the signal and sends a command to the corresponding lamp, which turns on, via this command. For example, when you press the button **(220),** the lamp **(320)** turns on, which projects a left turn sign on the area (130). The same principle works with other buttons and lamps, providing an individual connection between one lamp and one button.

A person with skills in this field of technology, it is clear that communication between the controller and the projector can be provided through various forms of wireless communication, including through wireless personal networks, wireless local networks and wireless networks of a city scale. In each case, both the controller and the projector contain the corresponding modules connected to each other and ensuring the turning on of the projector lamps by pressing the corresponding controller buttons.

The mechanism is designed in such a way that, by default, one sign-the sign of the cyclist- is constantly projected on the area **(130)** of the cyclist's back. The remaining signs are activated as a result of the corresponding command that the cyclist gives via the controller. The projection of a sign lasts for 6 seconds (if no other button is pressed during this time), and then the cyclist's sign is switched on again.

## Claims

1. The device that is designed to illuminate a bicycle for the purpose of ensuring road safety and includes:
a controller, comprising buttons, each turns on one projector lamp, and attached to the steering part of the bicycle;
a projector comprising lamps corresponding to the relevant buttons of the controller, attached to the bike seat;
a tube connecting the projector and the bicycle seat in such a way that the light figures emanating from the projector lamps are projected onto the cyclist's back.

2. A device according to Claim **1,** comprising the projection of a light figure in the form of a cyclist's sign.

3. A device according to Claim **1,** comprising the projection of a light figure in the form of arrows to the right or to the left.

4. A device according to Claim **1,** comprising the projection of a light figure in the shape of a STOP sign.

5. A device according to Claim **1,** having a connection between the controller and the projector via Bluetooth.

6. A device according to Claim **1,** having a connection between the controller and projector using radio waves.

7. A device according to Claim **1** having a wireless LAN connection between the controller and the projector.
